# EUROPEAN PATENT SPECIFICATION

(11) **EP 0 473 574 B1**
(45) Date of publication and mention of the grant of the patent: **28.12.1994**
(21) Application number: 89906224.4
(22) Date of filing: 15.05.1989
(51) Int. Cl.: B29C 43/14, B29C 43/18, D01D 5/11

(54) **PROCESS FOR MOLDING TARGET ELECTRODE USED IN THE APPLICATION OF ELECTROSTATIC CHARGE TO A FIBROUS STRUCTURE**
VERFAHREN ZUM FORMEN EINER ZIELELEKTRODE FÜR DAS ELEKTROSTATISCHE AUFLADEN EINER FASERSTRUKTUR
PROCEDE DE MOULAGE D'UNE ELECTRODE CIBLE UTILISEE DANS L'APPLICATION D'UNE CHARGE ELECTROSTATIQUE A UNE STRUCTURE FIBREUSE

(43) Date of publication of application: 11.03.1992
(73) Proprietor: E.I. DU PONT DE NEMOURS AND COMPANY, Wilmington Delaware 19898 (US)
(72) Inventor: GRAHAM, John, C., Richmond, VA 23231 (US)
(74) Representative: Jones, Alan John
(86) International application number: US8902002
(87) International publication number: WO9014202

(56) References cited:
- FR-A- 1 205 511
- FR-A- 1 482 969
- US-A- 3 578 739
- US-A- 4 359 438

## Description

### 1. Field of the Invention:

This invention relates to the manufacture of dielectric surfaces of target electrodes used in the application of electrostatic charge to fibrous structures, and relates more particularly to the process for molding dielectric surface layers of target electrodes used in the application of electrostatic charge to multifibrous webs during manufacture thereof by flash-spinning, subsequent charging and spreading, and depositing onto a moving surface.

### 2. Prior Art and Other Considerations:

Processes and apparatus for flash-spinning multifibrous web structures of interconnecting fibrous filaments, including target electrodes used in electrostatic charging of thusly spun fibrous structures for spreading and depositing thereof, are known in the art.

U.S. Patent No. 3,578,739 issued to George discloses an apparatus for applying electrostatic charge to flash-spun fibrous structures, wherein the fibrous structures pass through a charging zone between a corona discharge electrode and a target electrode, the target electrode having a conductive base and a high-resistance surface covering. The high-resistance dielectric surface covering is provided to reduce a problem-causing effect associated with flash-spinning and electrostatic charging of fibrous structures, namely the generation of small separated particles which become attracted to the target electrode and build up an electrically insulating film thereupon. When the potential drop across this film exceeds its dielectric strength, breakdown occurs and tiny craters are created that become a source of "back corona", causing neutralization of the charge on the fibrous structures with consequent degradation and loss of process performance. The high-resistance dielectric surface covering spreads out the charging field, thereby reducing current density, and it restricts the amount of current that may be drawn to points of breakdown. Thus the apparatus of U.S. Patent No. 3,578,739 reduces the undesirable effects of target electrode fouling by particle deposits.

Whereas the dielectric surface covering of the target electrode disclosed by George in the aforementioned patent provides satisfactory short-term performance, its needful properties degrade relatively rapidly under usual operating conditions.

U.S. Patent No. 3,860,369 to Brethauer et al also discloses an apparatus for making non-woven fibrous sheets, and including electrostatic charging of the web in a corona discharge zone that includes a metal disc target electrode which is preferably covered with a dielectric insulating surface as disclosed in U.S. Patent No. 3,578,739.

U.S. Patent No. 3,689,608 to Hollberg et al discloses a process for forming a nonwoven web that includes electrostatic charging of the web in a corona discharge zone between an ion gun and an all-metal target plate. Experience has shown that fouling particle deposits collecting upon metal target electrodes rapidly reduce the effectiveness of electrostatic charging of the web for the reason and in the manner hereinbefore indicated in conjunction with U.S. Patent No. 3,578,739.

The present invention is intended to substantially reduce the aforesaid problems associated with target electrodes that have resulted in relatively short useful operating life for heretofore known target electrodes and surface coverings therefor, and accordingly, the invention has as a primary object the provision of a process for molding of a dielectric target surface layer to significantly reduce the rate of loss in charging efficiency caused by in-process degradation of the surface layer and by flash-spun fouling deposits accumulating upon the target electrode in the course of electrostatic charging of the fibrous structure that is being fed to and along the target surface, so that useful target surface layer operating lifetimes are achieved that are significantly longer than heretofore possible.

It is a further object of the invention to provide a process for molding of a dielectric surface layer to achieve therefor a continuous and smooth surface being substantially free of defects, such as scratches, nicks, and cracks, to provide a dielectric surface layer that is substantially homogeneous throughout, having substantially no voids and air or gas inclusions within the layer and at the interface thereof with the metal target base over which it is molded, and to promote intimate adhesion between the molded dielectric surface layer and the metal target base.

### SUMMARY OF THE INVENTION

In accordance with principles of the present invention, regions on the target electrode exposed to corona discharge are molded over with a dielectric surface layer, that comprises a rubber copolymer formulation of primarily acrilonitrile/butadiene and phenolic resin hardener.

The dielectric surface layer molding process according to principles of the present invention serves to achieve a substantially defect-free surface layer that is flat, smooth, and continuous, and that has a hardness in the range of 75 to 85 Shore A Durometer, while voids and air or gas inclusions are substantially avoided within the layer and between the layer and the metal target base. The substantially homogeneous dielectric surface layer covers and adheres intimately to surfaces and edges of the metal target base. The process further includes removal of mold flashing to substantially eliminate irregular surfaces and to leave surfaces smooth.

The molding process comprises cleaning of the metal target base and installation thereof in a preheated mold cavity, that has been treated with release agent, loading of the mold cavity with milled material in accordance with the material formulation for the dielectric surface layer, closure of heated mold and loading thereof through compression cycles, and curing of the molded layer (while disposed in mold). Immediately upon completion of the molding cycle within the mold cavity, the metal target base together with the dielectric surface layer molded thereover is removed from the mold and the combination part is post-treated for a cooling time whilst being compression loaded between parallel plates.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference numerals refer to like parts throughout different views. The drawings are schematic and not necessarily to scale, emphasis instead being placed upon illustrating principles of the invention.
FIG.1 is a schematic cross-sectional elevation of relevant components in an apparatus for flash-spinning multifibrous web structures, the components including a metal target electrode base having a dielectric surface layer molded thereover according to principles of the present invention;
FIG.2 is an enlarged schematic sectional view of a target electrode including a molded dielectric surface layer as indicated in FIG.1;
FIG.3 is a fragmented schematic sectional view of a portion of a hot press molding apparatus including a portion of a mold cavity in use for molding of a dielectric surface layer according to principles of the invention; and
FIG.4 is a fragmented schematic sectional depiction of a portion of a fixture in use for the post-treatment cooling step of the process according to the invention.

### DESCRIPTION OF THE PREFERRED EMBODIMENTS

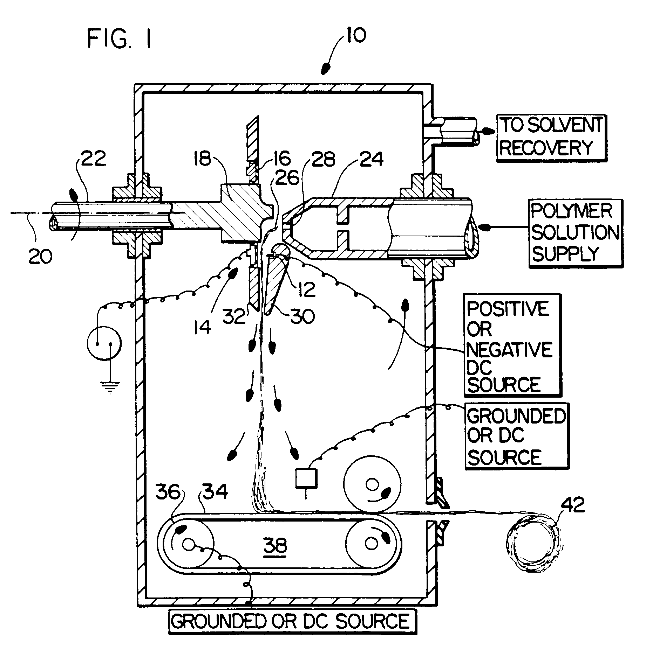

Referring now to FIG. 1, a flash-spinning apparatus 10 is schematically depicted therein that is used in production of multifibrous web structures. The shown apparatus comprises charging means for electrostatically charging such structures. The charging means includes an ion gun 12 and a target electrode 14; the latter being generally shaped in form of an annular disc. Target electrode 14 is provided with a dielectric surface layer 16, and is concentrically disposed about a baffle 18. Baffle 18 is revolved about axis 20, as indicated by arrow 22. A spinneret 24 is supplied with a pressurized polymer solution that issues from orifice 28 and forms a fibrous structure 26. An aerodynamic shield comprises a first member 30 and a second member 32. Target electrode 14 together with second member 32 are adapted to be rotated independently of baffle 18, but concentrically therewith, by means not shown here. A collecting surface 34 is comprised in an endless belt 36 that is carried by rolls of a powered conveyor means 38.

Fibrous structure 26, issuing from orifice 28, is deflected by aerodynamic influences and by the surface shape of baffle 18 downwardly to and along dielectric surface layer 16 of target electrode 14, and therefrom between first and second shield members 30 and 32, and continues to move downwardly toward and onto moving collecting surface 34.

Ion gun 12, comprised in first shield member 30, is supplied with a potential of 50 to 100 kilovolts. Target electrode 14 is connected to electrical ground via a here not shown contact ring and brush arrangement. A corona discharge is produced between ion gun 12 and target electrode 14, and continuously charges fibrous structure 26, thereby causing spreading thereof. Collecting surface 34 is electrically conductive and is grounded or given an opposite charge relative to the charge imposed on fibrous structure 26. Consequently, fibrous structure 26 is attracted to and deposited upon collecting surface 34 in flattened sheet-like form and is conveyed by powered conveyor means 38 to an accumulating means 42.

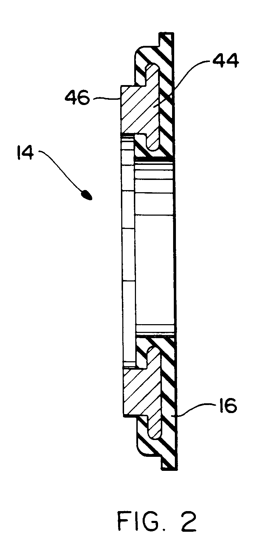

Referring now to FIG.2, target electrode 14 is shown therein in an enlarged sectional view. Target electrode 14 comprises a metal target base 44 covered over most of its surface by dielectric surface layer 16. Dielectric surface layer 16 extends over target base 44 at least over those regions that are directly exposed to corona discharge. Target electrode 14 has an approximate shape of an annular disc having a ring-like contact mount member 46 of target base 44 protruding from one face thereof. At least a portion of contact mount member 46 remains uncovered by dielectric surface layer 16 to facilitate electrical connection to ground, as hereinbefore indicated in conjunction with FIG.1. As also particularly shown in FIG.1, a portion of the flat face of target electrode 14 faces toward ion gun 12. The thickness of dielectric surface layer 16, at least where it is disposed over the region of the flat face of target electrode 14, is preferably about 1.5 mm thick, although other thicknesses can be used, particularly to accommodate various sizes of flash-spinning apparatus 10. Dielectric surface layer 16 is preferably compression molded over target base 44, although other molding methods can be applied satisfactorily.

A preferred target electrode 14 (including its dielectric surface layer) has approximate dimensions of 19.05 centimeters for its outer diameter, 10.16 centimeters for its inside diameter, and approximately 79.4 millimeters for the thickness of its metal target base 44, while its dielectric surface layer is approximately 15.9 millimeters thick.

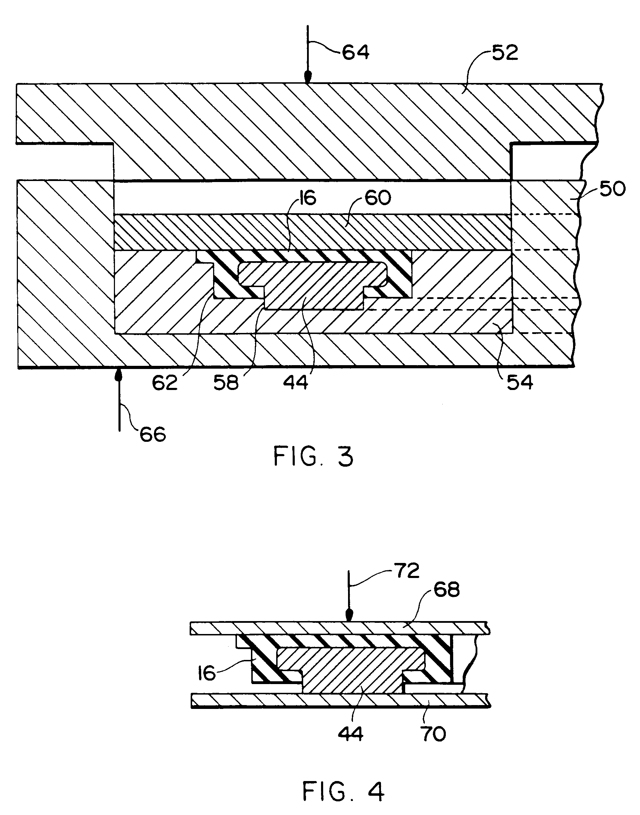

Referring now to FIG.3, a portion of a hot press molding apparatus is shown to include a mold base 50 and a mold compression member 52. A mold cavity 54 is removably disposed in mold base 50. Metal target base 44 is seated in a recess 58 within mold base 50. A closure plate 60 removably covers mold cavity 54, enclosing therein a cavity 62 that is disposed between outer surfaces of metal target base 44 and inside surfaces of mold cavity 54 and closure plate 60.

The region of cavity 62 is shaped to correspond to the shape of dielectric surface layer 16 (that is to be molded), and is shown here to contain a dielectric surface layer as molded over metal target base 44. Mold compression member 52 fits slidably into the upper opening of mold base 50 to facilitate compression loading of the contents of cavity 62 within mold cavity 54 via closure plate 60. The applied compression loading force is schematically indicated here by a force arrow 64. Heat transfer by heating of mold base 50, including the components contained therein, is schematically indicated by heat transfer arrow 66. It will be appreciated, particularly in view of the depicted shape of target electrode 14 with dielectric surface layer 16 in FIGS.1 and 2, that the portion of the hot press molding apparatus shown in FIG.3 is approximately only a fragmental portion of the entire mold arrangement, which entire arrangement has a ring or pancake-shaped general form.

Referring to FIG.4, a cooling fixture arrangement comprises a top plate 68 and a bottom plate 70 in parallel relationship, having disposed therebetween the metal target base 44 with dielectric surface layer 16 molded thereover. This arrangement serves for post-treatment of the molded dielectric surface layer by cooling (from the molding temperature) whilst being subjected to compression loading in its flat facial region to enhance its surface properties and its intimate adhesion to metal target base 44. This post-treatment also promotes closure of any tiny voids in dielectric surface layer 16. Compression arrow 72 indicates schematically the compression loading force applied during the post-treatment. It will be appreciated, particularly in view of the depicted shape of target electrode 14 with dielectric surface layer 16 in FIGS.1 and 2, that the portion of the cooling fixture arrangement shown in FIG.4 is approximately only a fragmental portion of the entire fixture arrangement, which entire arrangement has a ring or pancake-shaped general form.

The process for molding a target electrode dielectric surface layer in accordance with principles of the present invention comprises the steps of cleaning metal target base 44, for instance with suitable solvent, preheating mold cavity 54 to a temperature of preferably about 160 degrees C, and inserting mold cavity 54 into a hot press molding apparatus. Further, an appropriate mold release agent is applied to internal surfaces of mold cavity 54, metal target base 44 is installed in recess 58, and the dielectric surface layer material formulation (for instance in milled form) is loaded into cavity 62. This rubber copolymer formulation preferably comprises primarily acrylonitrile/butadiene and phenolic hardener. Mold cavity 54 is then closed with closure plate 60 and compression loading is applied thereto via mold compression member 52 in one or more relatively short compression cycles. Preferred compression cycling conditions (for a target electrode in the preferred size hereinbefore indicated) comprise an application of a load of 4.545 kilograms with a subsequent release of this load, and thereafter an application of a load of 22,727 kilograms.

Subsequently, the dielectric surface layer material formulation is cured in the closed mold cavity 54 in the hot press apparatus under substantially constant compression loading and at a substantially constant curing temperature. The curing conditions preferably comprise a compression load of about 22.727 kgs. (for a target electrode in the preferred size hereinbefore indicated) and a temperature of about 150 to 155 degrees C for a curing time of about 20 to 25 minutes.

Thereafter, metal target base 44 with dielectric surface layer 16 molded thereover is removed from mold cavity 54, and the combination is cooled in a cooling fixture, as hereinbefore described, between top plate 68 and bottom plate 70, while compression loading is applied to these plates. A preferred compression loading (for a target electrode in the preferred size hereinbefore indicated) is about 13.6 kilograms for a cooling time sufficient for the target electrode to reach room temperature. The process further includes removal of any mold flashing to substantially eliminate irregular surfaces and to leave surfaces smooth.

In producing nonwoven sheets from continuous fibrous structures in an apparatus as, for example, hereinbefore indicated, uniform electrostatic charging of fibrous structure 26 is required to maintain spread of its partially interconnected filaments and to effectively deposit the structure in flattened form onto collecting surface 34. An electrostatic charge is imparted to fibrous structure 26 during its passage between ion gun 12 and the portion of target electrode 14 nearest thereto. Fibrous structure 26 passes through the unipolar region formed over the surface of target electrode 14. The unipolar region is established by the flow of ions from the corona discharge device, namely ion gun 12, to target electrode 14. The charge captured by fibrous structure 26 has the same polarity as the charge of ion gun 12. As an identical polarity charge is imparted to components of fibrous structure 26, Coulomb repulsion forces spread such components apart.

It is known in the art, that in the course of flash-spinning of multifibrous web structures, as hereinbefore indicated, undesirable tiny solidified polymer particles are also generated. Such particles entering the electrostatic field region are therein sprayed with ions, are charged thereby, and become predominantly attracted to grounded target electrode 14 whereupon they form a nonconducting layer of fouling deposits. As fouling deposits accumulate, voltage drop therethrough increases and eventually exceeds the breakdown potential thereof, and breakdown of the fouling deposit layer occurs in form of tiny crater-like defects that become sources of "back corona" discharges. Positive and negative ions are produced thereby, and these ions in turn decrease the unipolarity of the region in the vicinity of target electrode 14, thusly causing loss of charge in fibrous structure 26 during passage thereof through this region. It will be understood that the effectiveness of electrostatic charging is thereby significantly degraded.

This problem was first recognized in the art in conjunction with the operation of bare metal target electrodes, and it has been somewhat alleviated by provision of a high-resistance layer covering over metal targets, as for instance disclosed in the hereinbefore referenced U.S. Patent No. 3,578,739. However, whereas the therein disclosed high-resistance layer coverings extend the useful operating life of target electrodes and thereby somewhat alleviate the problem, the needful properties of the disclosed high-resistance layer coverings nonetheless degrade rapidly under usual operating conditions, and relatively short useful lifetimes result. For instance, experience has shown that practical operating lifetimes of no more than about two days of continuous use are achievable with target electrodes covered with high-resistance layers in accordance with the teachings of U.S.Patent No. 3,578,739.

In order to significantly extend useful lifetimes of target electrodes, the present invention provides a process for molding of dielectric surface layer 16 having intimate contact with the metal target base 44 of target electrode 14, the dielectric surface layer 16 extending at least over those regions upon target electrode 14 that are directly exposed to corona discharge. Dielectric surface layer 16 comprises a rubber copolymer formulation of acrylonitrile/butadiene and phenolic resin hardener, exhibiting a hardness in the range of 75 to 85 Shore A Durometer and a volume resistivity between 2x10⁹ and 2x10¹⁰ ohm-cm when measured at 60 degrees C and 1000 volts.

Under laboratory conditions extending over 48 hours and simulating process operating conditions, the dielectric surface layer 16 of the present invention has exhibited a rate of increase in voltage thereacross of no more than 1 to 2 KV per 24 hours when tested at constant charging supply current. This represents a 3 to 8 fold improvement over the rate of voltage increase exhibited by good quality prior art target coatings which were tested under identical conditions.

Moreover, on-line tests under actual process conditions showed a lifetime of less than 100 hours for over 75 percent of the number of prior art target coatings tested, the lifetime being established by the time to process failure due to target coating failure. The remainder of less than 25 percent of the prior art target coatings exhibited an average rate of voltage increase of about 3.3 KV per 24 hours. As opposed to that, targets coated with the dielectric surface layer 16 according to the present invention, when on-line tested under indentical actual process conditions, showed a substantially lesser average voltage increase rate of about 1.2 KV per 24 hours. It will be appreciated that these results indicate a very significant increase in useful lifetimes for the dielectric surface layer 16 of the present invention, this lifetime increase being at least about three-fold and as much as about eight-fold or more in actual practice.

The significance of the voltage (and therewith the resistance) across a dielectric surface layer of a target electrode is based in the hereinbefore described breakdown effect. As the voltage drop increases across the layer (due to resistivity increase under operating conditions), the material breakdown potential is approached and eventually reached. Thereafter, charging effectiveness is rapidly degraded and lost and the process fails. Therefore, the material properties of the dielectric surface layer are of critical importance to the process. Particularly, resistivity and voltage drop across the layer and the stability thereof in the operating environment are of crucial significance. The operating environment includes corona bombardment in a solvent vapor atmosphere at temperatures of 60 degrees C and higher. Similarly, the reproducibility of these properties, of the physical dimensions of the surface layer, and of its surface quality are key factors in the provision of a suitable material and in the molding thereof.

It has also been found that an increase in the hardness of the dielectric surface layer significantly improves its in-process performance and the stability of its properties, particularly its mechanical characteristics, and protects the surface from being degraded. Whereas prior art target coatings have been found to exhibit a hardness in the range of 67 to 70 Shore A Durometer or less, the molded dielectric surface layer of the present invention has an increased hardness in the range of 75 to 85 and preferably at least 81 to 82 Shore A Durometer.

As hereinbefore indicated, the dielectric surface layer material of the present invention comprises rubber copolymer formulations of acrylonitrile/butadiene and phenolic resin that provide the described properties and characteristics. A number of satisfactory formulations fulfilling these property requirements have been developed, wherein the rubber copolymer formulations comprise primarily acrylonitrile/butadiene and phenolic resin, and further include zinc oxide for vulcanization enhancement, carbon black for resistivity control, stearic acid to enhance crosslinking associated with vulcanization, and curing accelerators. In particular, preferred rubber copolymer formulations comprise 100 parts of acrylonitrile/butadiene (in a ratio of 35 to 65, respectively), 25 to 30 parts of phenolic resin, 5 to 5.5 parts of zinc oxide, 10 parts of carbon black, 1.5 parts of stearic acid, and 3 parts of curing accelerators. In order to particularly enhance ease of molding of the material formulation into the dielectric surface layer of the invention, the phenolic resin component is reduced toward the lower end of the above given range, preferably to 25 parts, and the stearic acid component is increased to preferably 5.5 parts.

From the description hereinbefore provided, it will be appreciated that the properties of the dielectric surface layer are of great importance to its satisfactory in-process performance in the application of electrostatic charge to flash-spun fibrous structures. Not only the particular material formulation of the dielectric surface layer, but equally so the applied molding process establish these properties. Proper molding process conditions are critical to the achievement of desirable properties, and significant changes in these conditions can easily result in a short life or unacceptable performance of the dielectric surface layer. The molding process per se, for instance, particularly also critically influences the achievability of homogeneity and hardness of the dielectric surface layer, of continuous and smooth surfaces substantially free of defects, such as scratches, nicks, and cracks, of substantial absence of voids and air or gas inclusions within the layer and at the interface thereof with the metal target base over which it is molded, and of intimate adhesion between the molded dielectric surface layer and the metal target base. These and other needful objects are achieved by the molding process of this invention.

While the invention has been particularly shown and described with reference to preferred embodiments thereof, it will be understood by those skilled in the art that various changes and modifications in form and details may be made therein without departing from the scope of the invention.

## Claims

1. A process for molding a target electrode (14) dielectric surface layer used in electrostatic charging of flash-spun fibrous structures, comprising the following steps:
a. cleaning a metal target base (44);
b. preheating and inserting a mold cavity (54) into a hot press apparatus, said mold cavity being shaped to receive said metal target base (44), and applying a release agent to surfaces in said mold cavity;
c. installing said metal target base in said mold cavity (54);
d. loading a dielectric surface layer material formulation into said mold cavity (54) and closing said mold cavity with a closure plate (60) to form a closed mold cavity (62), said closed mold cavity providing therein a region substantially corresponding to said target electrode dielectric surface layer (16), said dielectric surface layer material formulation comprising primarily a rubber copolymer formulation of acrylonitrile/butadiene and phenolic resin hardener;
e. applying one or more compression load cycles to said closed mold cavity in and by said hot press apparatus, wherein said one or more compression cycles comprise compression loading of said closed mold cavity to about 4.545 kilograms and subsequently releasing said compression loading, and thereafter compression loading said closed mold cavity (62) to about 22,727 kilograms, said one or more compression cycles being performed whilst said closed mold (62) is kept substantially at a temperature of about 160 degrees C, and curing said dielectric surface layer material formulation in said closed mold cavity under curing temperature and curing compression loading conditions, said dielectric surface layer material (16) formulation being molded and intimately adhering thereby to surfaces of said metal target base (44); and
f. removing from said closed mold cavity (62) the combination of said metal target base (44) with said dielectric surface layer material (16) formulation and cooling the combination under compression loading.

2. The process according to claim 1, wherein said preheating in step (b) is performed to a temperature of about 160 degrees C.

3. The process according to claim 1, wherein said dielectric surface layer material formulation (16) further includes zinc oxide for vulcanization enhancement, carbon black for resistivity control, stearic acid to enhance crosslinking associated with vulcanization, and curing accelerators.

4. The process according to claim 1, wherein said dielectric surface layer material formulation (16) substantially comprises 100 parts of acrilonitrile/butadiene in a ratio of 35 to 65 respectively, 25 to 30 parts of phenolic resin, 5 to 5.5 parts of zinc oxide, 10 parts of carbon black, 1.5 parts of stearic acid, and 3 parts of curing accelerators.

5. The process according to claim 1, wherein said curing temperature and curing compression loading conditions in step (e) include 150 to 155 degrees C and about 22,727 kilograms, respectively, for a time of 20 to 25 minutes.

6. The process according to claim 1, wherein said cooling in step (f) is executed under compression loading of about 13.6 kilograms for a time sufficient for the target electrode (14) to reach room temperature, said compression loading being applied between the flat face of said target electrode dielectric surface layer (16) and said metal target base (44)

7. The process according to claim 1, wherein at least a portion of said target electrode dielectric surface layer (16) has a thickness of about 1.5 mm.

8. The process according to claim 1, wherein said target electrode dielectric surface layer (16) exhibits a hardness in the range of 75 to 85 Shore A Durometer.

9. The process according to claim 1, wherein said target electrode dielectric surface layer (16) exhibits a volume resistivity in the range of about 2X10⁹ to 2X10¹⁰ ohm-cm when measured at 60 degrees C and 1000 volts.

10. The process according to claim 1, wherein said target electrode dielectric surface layer (16) exhibits a rate of increase in voltage of no more than 1 to 2 KV per 24 hours when tested at constant charging current under normal flash-spinning process operating conditions.

## Patentansprüche

1. Verfahren zum Formen einer dielektrischen Oberflächenschicht einer Anodenelektrode (14), welche zum elektrostatischen Aufladen von Flash-gesponnenen Fasergebilden eingesetzt wird, welches folgende Schritte aufweist:
a. Reinigen einer Metallanodenbasis (44);
b. Vorwärmen und Einführen eines Formhohlraums (54) in eine Heißpreßvorrichtung, wobei der Formhohlraum derart ausgebildet ist, daß die Metallanodenbasis (44) aufgenommen wird, und wobei ein Trennmittel auf die Oberflächen in dem Formhohlraum aufgebracht wird;
c. Einbauen der Metallanodenbasis in den Formhohlraum (54);
d. Einbringen einer Materialformulierung für die dielektrische Oberflächenschicht in den Formhohlraum (54) und Schließen des Formhohlraums mittels einer Verschlußplatte (60), um einen geschlossenen Formhohlraum (62) zu bilden, wobei der geschlossene Formhohlraum darin einen Bereich bereitstellt, welcher im wesentlichen der dielektrischen Oberflächenschicht (16) der Anodenelektrode zugeordnet ist, wobei die Materialformulierung für die dielektrische Oberflächenschicht hauptsächlich eine Kautschukcopolymerformulierung aus Acrylonitril/Butadien und Phenolharzhärter aufweist;
e. Aufbringen von einem oder mehreren Verdichtungszyklen auf den geschlossenen Formhohlraum in und mittels der Heißpreßvorrichtung, wobei dieser einen oder mehrere Verdichtungszyklen mit einer Verdichtungsbelastung auf den geschlossenen Formhohlraum auf etwa 4,545 Kilogramm und anschließendem Entlasten der Verdichtungsbelastung und anschließendem Aufbringen einer Verdichtungsbelastung auf den geschlossenen Formhohlraum (62) auf etwa 22.727 Kilogramm aufweist, wobei dieser eine oder mehrere Verdichtungszyklen ausgeführt wird oder werden, während dem die geschlossene Form (62) im wesentlichen auf einer Temperatur von etwa 160°C gehalten ist, und Härten der Materialformulierung für die dielektrische Oberflächenschicht in dem geschlossenen Formhohlraum unter einer Härtungstemperatur und Härtungsverdichtungs-Belastungsbedingungen, wobei die Materialformulierungfür die dielektrische Oberflächenschicht (16) geformt und in inniger haftender Verbindung hierdurch an den Oberflächen der Metallanodenbasis (44) gebracht wird; und
f. Entfernen der Kombination aus Metallanodenbasis (44) mit der Materialformulierung für die dielektrische Oberflächenschicht (16) aus dem geschlossenen Formhohlraum (62) und Abkühlen der Kombination unter Verdichtungsbelastung.

2. Verfahren nach Anspruch 1, bei dem das Vorerwärmen gemäß dem Schritt (b) bei einer Temperatur von etwa 160°C erfolgt.

3. Verfahren nach Anspruch 1, bei dem die Materialformulierung für die dielektrische Oberflächenschicht (16) ferner Zinkoxid zur Vulkanisierungsunterstützung, Ruß für die Einstellung des spezifischen Widerstands, Stearinsäure zur Unterstützung der mit der Vulkanisierung einhergehenden Vernetzung und Härtungsbeschleuniger umfaßt.

4. Verfahren nach Anspruch 1, bei dem die Materialformulierung für die dielektrische Oberflächenschicht (16) im wesentlichen 100 Teile Acrilonitril/Butadien in einem Verhältnis von 35 bis 65 jeweils, 25 bis 30 Teile Phenolharz, 5 bis 5,5 Teile Zinkoxid, 10 Teile Ruß, 1,5 Teile Stearinsäure und drei Teile Härtungsbeschleuniger aufweist.

5. Verfahren nach Anspruch 1, bei dem die Härtungstemperatur und die Härtungsverdichtungs-Belastungsbedingungen im Schritt (e) 150 bis 155 °C und etwa 22,727 Kilogramm jeweils während einem Zeitraum von 20 bis 25 Minuten umfassen.

6. Verfahren nach Anspruch 1, bei dem das Kühlen im Schritt (f) unter Verdichtungsbelastung von etwa 13,6 Kilogramm während einer so ausreichenden Zeit erfolgt, daß die Anodenelektrode (14) Raumtemperatur erreicht, wobei die Verdichtungsbelastung zwischen der ebenen Fläche der dielektrischen Oberflächenschicht (16) der Anodenelektrode und der Metallanodenbasis (44) aufgebracht wird.

7. Verfahren nach Anspruch 1, bei dem wenigstens ein Teil der dielektrischen Oberflächenschicht (16) der Anodenelektrode eine Dicke von etwa 1,5 mm hat.

8. Verfahren nach Anspruch 1, bei dem die dielektrische Oberflächenschicht (16) der Anodenelektrode eine Härte in einem Bereich von 75 bis 85 Shore A Durometer hat.

9. Verfahren nach Anspruch 1, bei dem die dielektrische Oberflächenschicht (16) der Anodenelektrode einen spezifischen Durchgangswiderstand in einem Bereich von etwa 2x10⁹ bis 2x10¹⁰ Ohm-cm gemessen bei 60°C und 1000 Volt hat.

10. Verfahren nach Anspruch 1, bei dem die dielektrische Oberfläche (16) der Anodenelektrode eine Spannungszunahmerate von nicht größer als 1 bis 2 KV pro 24 Stunden hat, wenn eine Test bei konstantem Ladestrom unter normalen Flashspinn-Betriebsbedingungen erfolgt.

## Revendications

1. Un procédé de moulage d'une couche superficielle diélectrique pour une électrode cible (14) utilisée pour la charge électrostatique de structures fibreuses obtenues par filage éclair, comprenant les étapes consistant à:
a. nettoyer une base métallique de cible (44);
b. préchauffer une cavité de moule (54) et l'insérer dans un appareil de pressage à chaud, ladite cavité de moulage étant conformée de façon à recevoir ladite base métallique de cible (44) et appliquer un agent de démoulage aux surfaces de ladite cavité de moulage;
c. installer ladite base métallique de cible à l'intérieur de ladite cavité de moulage (54);
d. charger une formulation du matériau de formation de la couche superficielle diélectrique dans ladite cavité de moulage (54) et fermer ladite cavité de moulage au moyen d'une plaque de fermeture (60) afin de constituer une cavité de moulage fermée (62), ladite cavité de moulage fermée définissant en son intérieur une zone qui correspond sensiblement à ladite couche superficielle diélectrique (16) de ladite électrode cible, ladite formulation du matériau de formation de la couche superficielle diélectrique comprenant, principalement, une formulation d'un copolymère de caoutchouc d'acrylonitrile/butadiène et un agent de durcissement à résine phénolique;
e. appliquer un ou plusieurs cycles de charge en compression à ladite cavité de moulage fermée, à l'intérieur dudit appareil de pressage à chaud et au moyen de celui-ci, ledit un ou lesdits cycles de compression comprenant le chargements en compression de ladite cavité de moulage fermée à environ 4,545 kg, et ensuite le relâchement de ladite charge de compression, puis le chargement en compression ladite cavité de moulage fermée (62) à environ 22 727 kg, le ou lesdits cycles de compression étant réalisés tandis que ledit moule fermé (62) est sensiblement maintenu à une température égale à environ 160°C, et provoquer le durcissement de ladite formulation du matériau composant la couche superficielle diélectrique à l'intérieur de ladite cavité de moulage fermée sous des conditions de température et de charge de compression permettant d'obtenir le durcissement, ladite formulation du matériau de la couche superficielle diélectrique (16) étant moulé en adhérant en conséquence de façon intime à des surfaces de ladite base métallique de cible (44); et
f. retirer la combinaison de ladite base métallique de cible (44) et de ladite formulation comprenant le matériau de la couche superficielle diélectrique (16) de ladite cavité de moulage fermée (62), et refroidir la combinaison sous la charge de compression.

2. Le procédé selon la revendication 1, dans lequel ledit préchauffage à l'étape (b) est réalisé à une température d'environ 160°C.

3. Le procédé selon la revendication 1, dans lequel ladite formulation comprenant du matériau de la couche superficielle diélectrique (16) comprend, en outre, de l'oxyde de zinc pour améliorer la vulcanisation, du noir de carbone pour contrôler la résistivité, de l'acide stéarique pour améliorer la réticulation associée à la vulcanisation et des accélérateurs de durcissement.

4. Le procédé selon la revendication 1, dans lequel ladite formulation du matériau de la couche superficielle diélectrique (16) comprend, sensiblement, 100 parties d'acrylonitrile/butadiène dans un rapport de 35 à 65 respectivement, 25 à 30 parties de résine phénolique, 5 à 5,5 parties d'oxyde de zinc, 10 parties de noir de carbone, 1,5 parties d'acide stéarique, et 3 parties d'accélérateurs de durcissement.

5. Le procédé selon la revendication 1, dans lequel lesdites conditions de température de durcissement et de durcissement à l'étape (e) sont de 150 à 155°C et d'environ 22 727 kg, respectivement, pendant une durée de 20 à 25 minutes.

6. Le procédé selon la revendication 1, dans lequel ledit refroidissement à l'étape (f) est réalisé sous une charge de compression d'environ 13,6 kg pour une durée suffisant à permettre à l'électrode-cible (14) d'atteindre la température ambiante, ladite charge de compression étant appliquée entre la face plane de ladite couche superficielle diélectrique de l'électrode cible (16) et ladite base métallique de cible (44).

7. Le procédé selon la revendication 1, dans lequel au moins une partie de ladite couche superficielle diélectrique (16) de l'électrode cible présente une épaisseur d'environ 1,5 mm.

8. Le procédé selon la revendication 1, dans lequel ladite couche superficielle diélectrique (16) de l'électrode cible présente une dureté comprise dans la gamme de 75 à 85 Shore A Durometer.

9. Le procédé selon la revendication 1, dans lequel ladite couche superficielle diélectrique (16) de l'électrode cible présente une résistivité volumique comprise dans la gamme d'environ 2x10⁹ à 2x10¹⁰ ohm-cm mesurée à 60°C et 1000 volts.

10. Le procédé selon la revendication 1, dans lequel ladite couche superficielle diélectrique (16) de l'électrode cible présente un taux d'augmentation de tension égal ou supérieur à 1 à 2 kv par 24 heures quand on la teste avec un courant de charge constant sous des conditions opératoires habituellement employées pour le filage éclair.
